# EUROPÄISCHE PATENTANMELDUNG

(11) **EP 2 311 556 A1**
(43) Veröffentlichungstag der Anmeldung: **20.04.2011**
(21) Anmeldenummer: 09012696.2
(22) Anmeldetag: 07.10.2009
(51) Int. Cl.: B01J 19/32

(54) **Gewebepackung**

(71) Anmelder: T & R engineering GmbH, 46282 Dorsten (DE); BASF SE, 67056 Ludwigshafen (DE)
(72) Erfinder: Tüshaus, Rüdiger, 46286 Dorsten (DE); Rössler, Peter, 59071 Hamm (DE)
(74) Vertreter: Griepenstroh, Jörg

(57) **Zusammenfassung**

Eine neuartige Gewebepackung 1, bei der mehrere Gewebelagen 2 aus Metall-oder Kunststofffilamenten 3 parallel zueinander verlaufen, wird beschrieben. Die Gewebelagen 2 weisen Ausprägungen 4 auf, wobei mindestens eine Ausprägung 4 eine Öffnung 5 besitzt, die in einer Öffnungsebene 6 liegt, welche in einem Winkel von 40 bis 140 Grad zur Gewebelage ausgerichtet 2 ist. Die Öffnungen 5 der Gewebelagen 2 sind alle in eine Öffnungsrichtung X orientiert.

## Beschreibung

Die vorliegende Erfindung betrifft eine Gewebepackung zur thermischen Stofftrennung, aufweisend mehrere Gewebelagen aus Metall- und/oder Kunststofffilamenten, wobei die Gewebelagen Ausprägungen aufweisen, wobei mindestens eine Ausprägung eine Öffnung aufweist, gemäß den Merkmalen des Oberbegriffs des Anspruchs 1.

Weiterhin betrifft die Erfindung ein Verfahren zur Durchführung chemischer Reaktionen oder thermischer Stofftrennungen in einem Apparat gemäß dem Oberbegriff des Anspruchs 14.

In Trennkolonnen werden Destillationsverfahren durchgeführt, bei denen beispielsweise eine flüssige und eine dampfförmige Phase im Gegenstrom aneinander vorbeigeführt werden und ein Stoffaustausch zwischen den beiden Phasen stattfindet. Die verwendeten Stoffaustauschapparate können zum Beispiel Destillations- oder Rektifikationskolonnen sein. Der Stoffaustausch zwischen der Flüssigkeit und dem Dampf findet an der Grenzfläche der beiden Phasen statt. Um diese Grenzfläche zu erhalten und zu maximieren, werden trennwirksame Einbauten in den Destillationskolonnen angebracht, wie zum Beispiel Stoffaustauschböden, ungeordnete Füllkörper oder geordnete Packungen. Unter geordneten Packungen versteht man geometrische Anordnungen aus geformten Blech- oder Gewebelagen, die fest im Stoffaustauschapparat angeordnet sind. Die Packungen zeichnen sich durch eine große spezifische Stoffaustauschfläche und gleichzeitig einen niedrigen Druckverlust aus. Durch die Geometrie der Packung können die spezifische Stoffaustauschfläche und der Druckverlust der Packung gezielt verändert und entsprechend der gewünschten Trennaufgabe angepasst werden.

Gewebepackungen sind aus dem Stand der Technik bekannt und bestehen aus gefalteten oder gewellten Lamellen von Gewebelagen, die an den Berührungspunkten verlötet oder verschweißt werden. Die Lamellen können auch miteinander verschraubt oder vernagelt sein. Diese Gewebepackungen zeichnen sich durch hohe Trennleistungen bei gleichzeitig niedrigen spezifischen Druckverlusten aus. Bevorzugt werden Gewebepackungen bei Trennaufgaben im Vakuum und bei niedrigen Flüssigkeitsbelastungen eingesetzt, so zum Beispiel bei der Destillation von ätherischen Ölen, von Fettsäuren oder Fettalkoholen. Die Gewebepackungen nutzen dabei die Kapillarwirkung aus, um eine gute Benetzung der Oberfläche mit den Einsatzstoffen zu erhalten. Nicht eingesetzt werden Gewebepackungen hingegen bei hohen Flüssigkeitsbelastungen.

Aufgrund der Bauweise von Gewebepackungen und der damit verbundenen Flüssigkeitsführung ist die Gasbelastung der Packungen beschränkt. Eine zu hohe Gasbelastung führt zum Fluten der Packungen und damit zum Ausfall des Stofftrennapparates. In diesem Zusammenhang wird auch von der Kapazität der Packung gesprochen. Ein Maß für die Kapazität einer Packung ist dabei der aus dem Stand der Technik bekannte F-Faktor, der sich aus der Gasgeschwindigkeit im Apparat und der Wurzel der Gasdichte errechnet.

Eine dreidimensional verformte Gewebelage ist aus der EP 1 834 693 B1 bekannt. Dabei enthalten die Gewebepackungen einzelne Gewebelagen, die parallel angeordnet sind. Diese Gewebelagen können aus Metall- oder Kunststofffilamenten angefertigt sein. Es können auch flächige Materialien wie versinterte Metallfasern verwendet werden.

Die Gewebelagen bestehen aus Drahtgeweben, die aus einem Draht - monofil - oder aus mehreren verwundenen Drähten oder aus Fasern - multifil - ausgeführt sein können. Als Bindungsarten kommen insbesondere die drei Grundbindungsarten eines Gewebes zum Einsatz, d. h. die Leinenbindung, die Körperbindung und die Atlasbindung. Aber auch eine Tressenbindung mit oder ohne Wechsel ist vorstellbar, so wie Varianten der Bindungsarten möglich sind. Durch die Wahl der Gewebematerialien sowie die Wahl der Drähte, der Filamente, der Maschenweite und der Bindung kann die Oberfläche der Gewebelage grob oder fein gestaltet werden.

In der EP 1 834 693 B1 werden Gewebelagen offenbart, die durch Distanzausprägungen in einem definierten Abstand voneinander gehalten werden. Zusätzlich zu den Distanzausprägungen können sich Lenkausprägungen auf den Gewebelagen befinden. Die Lenkausprägungen unterscheiden sich von den Distanzausprägungen dadurch, dass sie die nächste Gewebelage nicht berühren. Die Lenkausprägungen dienen einer Modifikation der Oberfläche der Gewebelagen der Gewebepackung. Durch die Lenkausprägungen kann zum einen die spezifische Oberfläche der Gewebepackung verändert werden, zum anderen kann eine gezielte Strömung der flüssigen Phase auf den Gewebelagen der Gewebepackung und der Dampfphase entlang der Gewebelagen erreicht werden.

Aus der GB 451014 A sind Packungen mit Packungslagen bekannt, die bei Verfahren zur Stofftrennung oder Stoffreinigung eingesetzt werden. Die Packungslagen weisen dabei vorzugsweise pyramidenförmige Ausprägungen auf, die an ihren oberen Spitzen durch eine kreisförmige Öffnung gekennzeichnet sind. Die Öffnungen liegen parallel zu einer Ausrichtungsebene der Packungslage. Benachbarte Packungslagen liegen mit ihren komplementär ausgerichteten Öffnungen aufeinander und halten somit einen definierten Abstand.

Die aus dem Stand der Technik bekannten trennwirksamen Einbauten haben den Nachteil, dass sie bei einem Einsatz in einer Dampf-Flüssigkeits-Gegenstromkolonne eine nicht optimale Strömungsführung während des Verfahrensablaufes erzeugen.

Die Aufgabe der vorliegenden Erfindung ist es daher, eine neuartige Gewebepackung bereit zu stellen, die eine hohe Kapazität der Packung bei gleichzeitiger gezielter Strömungsführung der zu trennenden Stoffe ermöglicht.

Die Aufgabe wird erfindungsgemäß durch die Merkmale des Patentanspruchs 1 dadurch gelöst, dass die Gewebepackung einzelne Gewebelagen aufweist, die wiederum Ausprägungen mit Öffnungen aufweisen und dass die Öffnungen eine Öffnungsebene haben, welche in einem Winkel von 40 bis 140 Grad zur Gewebelage steht.

Im Betrieb der erfindungsgemäßen Gewebepackung wirkt sich dies dadurch besonders vorteilig aus, dass die Dampfströmung durch die Ausprägungen zwischen den Gewebelagen gezielt gestört wird, wobei ein Teil des Dampfes durch die Öffnungen in den Ausprägungen strömt und somit in der gesamten Gewebepackung gut verteilt wird. Durch die Störung der Dampfströmung entstehende Wirbel sorgen für die ständige Erneuerung der laminaren Schicht in der Dampfphase an der Grenzfläche zwischen Flüssigkeit und Dampf, wodurch immer ein treibendes Konzentrationsgefälle zwischen den Phasen besteht und ein intensiver Stoffaustausch möglich ist.

Vorzugsweise sind die Öffnungsebenen in einem Winkel von 60 bis 120 Grad, besonders bevorzugt 90 Grad zur Gewebelage angeordnet. Eine Anordnung mit einer im Wesentlichen senkrecht stehenden Öffnung ermöglicht in einem Gegenstromverfahren eine besonders gute Aufnahme des in die Öffnung einströmenden Fluids.

Eine Gewebelage weist in einer bevorzugten Ausführungsform eine Vielzahl von Ausprägungen auf, wobei jede Ausprägung eine Öffnung besitzt. Eine gezielte Strömungslenkung ist nun durch eine gleiche Orientierung aller Öffnungen einer Gewebelage möglich. Die Öffnungen können dabei in die Strömungsrichtung eines Fluides zeigen bzw. in die entgegengesetzte Strömungsrichtung.

Eine besonders bevorzugte Ausbildungsform der Ausprägungen mit Öffnungen sind viertelkugelschalenförmige Geometrien. Diese können durch Stanzen oder Pressen in die Gewebelage eingebracht werden. Weitere Ausbildungsformen, zum Beispiel als Halbkugel, Dreieck, Halbpyramide, Glocke, Zylinder, Halbkegel, Stäbchen oder Quader, bzw. eine beliebige Kombination der zuvor genannten geometrischen Ausbildungsformen, sind möglich. Je nach Anwendungsgebiet, Stoffmerkmalen und gewünschter Strömungslenkung muss hier eine passende Geometrie gemäß der vorliegenden Erfindung eingesetzt werden.

Vorzugsweise weist jede Gewebelage Ausprägungen auf, die in Distanzausprägungen und Lenkausprägungen eingeteilt werden. Lenkausprägungen sind dabei so ausgebildet, dass sie eine geringere Höhe aufweisen als die Distanzausprägungen. Vorzugsweise beträgt die Höhe der Lenkausprägungen 2 bis 60 mm, besonders bevorzugt 2 bis 15 mm.

Die einzelnen Gewebelagen sind über höchste Punkte der Distanzausprägungen gegeneinander abgestützt. Die Distanzausprägungen geben so einen definierten Abstand der Gewebelagen vor. Er liegt bevorzugt zwischen 1 und 100 mm, besonders bevorzugt zwischen 1 und 20 mm.

Die einzelnen Ausprägungen weisen einen Abstand von vorzugsweise 5 bis 100 mm, besonders bevorzugt 10 bis 50 mm untereinander auf. Über die Lage und Form sowie die Zusammensetzung von Lenk- und Distanzausprägungen auf einer Gewebelage besteht hier wiederum die Möglichkeit, gemäß der vorliegenden Erfindung eine auf das Verfahren optimal abgestimmte Gewebelage herzustellen.

In einer Ausbildungsform können die Lenkausprägungen und/oder Distanzausprägungen beidseitig oder wechselseitig auf der Gewebelage ausgebildet sein. Auch hier ergibt sich der Vorteil, dass durch die seitige Ausrichtung der Ausprägungen eine gezielte Strömungsführung möglich ist.

Die Gewebelagen weisen bevorzugt Verdichtungen in einer Ketten- oder Schussrichtung im Bereich zwischen den Ausprägungen auf. Weiterhin können in Schuss- oder Kettrichtung Flüssigkeitsleitabschnitte eingewebt sein, die von mindestens einem Flüssigkeitsfilament gebildet werden. Hierdurch ergibt sich der Vorteil, dass an den Verdichtungen im Ketten- bzw. Schussbereich zwischen den Ausprägungen aufgrund von erhöhten Kapillarkräften eine gute Flüssigkeitsverteilung erreicht wird.

Mindestens eine Kantenseite der Gewebelage kann mehrschichtig ausgebildet sein, wobei die Schichten vorzugsweise durch Umknicken oder Falten der Randbereiche herstellbar sind. Hierdurch werden Selbstverteilungseigenschaften der erfindungsgemäßen Gewebepackung im Vergleich zu den auf dem Markt zur Verfügung stehenden Gewebepackungen deutlich verbessert.

In einer weiteren bevorzugten Ausführungsvariante der Gewebepackungen ist die Oberfläche der Filamente keramisch oder metallisch beschichtet. Dies bietet wiederum die Möglichkeit, die Gewebelage gezielt auf das im Stofftrennverfahren eingesetzte Medium abzustimmen.

Vorzugsweise sind die erfindungsgemäßen Gewebelagen aus drahtförmigen und/oder flächenförmigen Filamenten monofil und/oder multifil ausgebildet, wobei die Gewebelagen bevorzugt durch Körperbindung, Atlasbindung Leinenbindung oder Tressenbindung oder in beliebiger Kombination der Bindungsarten herstellbar ist, und wobei bevorzugt die Filamente einen Durchmesser von 0,05 bis 1 mm, besonders bevorzugt 0,08 bis 0,25 mm aufweisen. Das so hergestellte Gewebe lässt sich durch ein Press- oder Stanzverfahren besonders vorteilhaft dreidimensional verformen.

Weiterhin offenbart die Erfindung ein Verfahren zur Durchführung chemischer Reaktionen oder thermischer Stofftrennungen in einem Apparat mit den Merkmalen des Anspruchs 14. Das Verfahren nutzt dabei Gewebepackungen nach einem oder mehreren der Ansprüche 1 bis 13.

Weitere Vorteile, Merkmale, Eigenschaften und Aspekte der vorliegenden Erfindung ergeben sich aus der folgenden Beschreibung, bevorzugte Ausführungsformen anhand der Zeichnungen. Diese dienen lediglich dem einfacheren Verständnis der Erfindung. Es zeigen.
- Figur 1: einen exemplarischen Ausschnitt einer Gewebelage;
- Figur 2: exemplarisch einen Schnitt durch eine Gewebelage;
- Figur 3: exemplarisch einen Schnitt durch eine Gewebepackung sowie
- Figur 4: verschiedene Ausbildungsformen von Ausprägungen.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

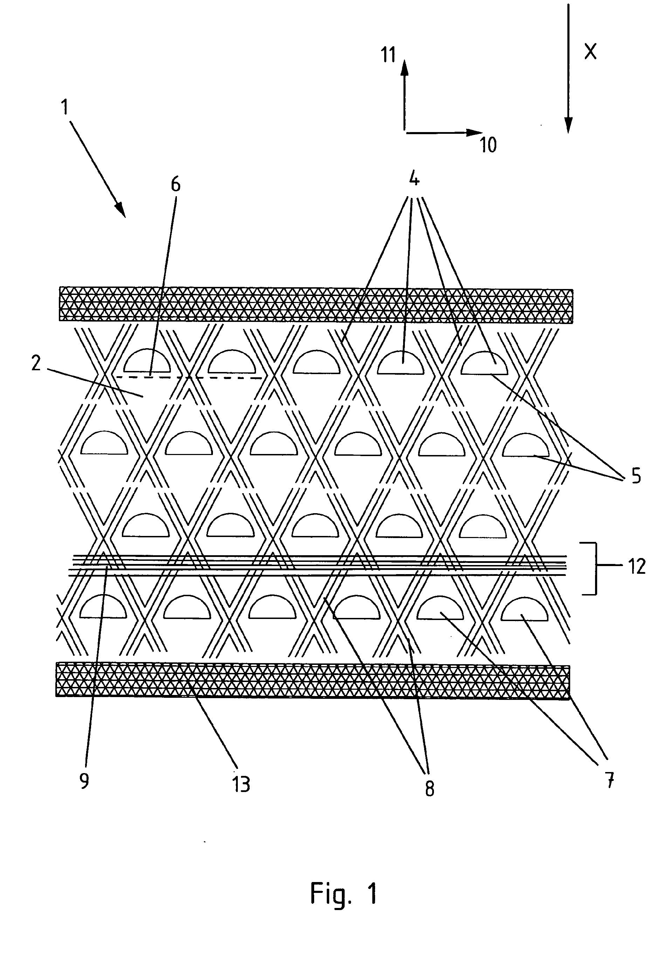

Figur 1 zeigt eine Gewebepackung 1 in einer Draufsicht, so dass nur ein Ausschnitt einer Gewebelage 2 von oben erkennbar ist. Die Gewebelage 2 ist aus Filamenten 3 in den zuvor beschriebenen Webtechniken gewebt und weist Ausprägungen 4 auf. Die Ausprägungen 4 sind auf der Gewebelage 2 gemäß dem Verfahren, in dem die Gewebepackung 1 eingesetzt wird, ausgerichtet. Mindestens eine Ausprägung 4 weist dabei eine Öffnung 5 auf, die in einer Öffnungsebene 6 liegt. Die Öffnungsebene 6 ist maßgeblich rechtwinklig auf der Gewebelage 2 ausgerichtet. Die Öffnungen 5 aller Ausprägungen 4 mit einer Öffnung 5 sind in eine Richtung X orientiert.

Die Ausprägungen 4 sind unterteilt in Distanzausprägungen 7 und Lenkausprägungen 8. Die Distanzausprägungen 7 halten innerhalb der Gewebepackung 1 die Gewebelagen 2 auf Abstand.

Die Gewebelage 2 weist Verdichtungen 9 auf, die in Kettrichtung 10 oder Schussrichtung 11 auf der Gewebelage 2 ausgebildet sind. Die Verdichtungen 9 liegen in Bereichen 12 zwischen den Distanzausprägungen 7.

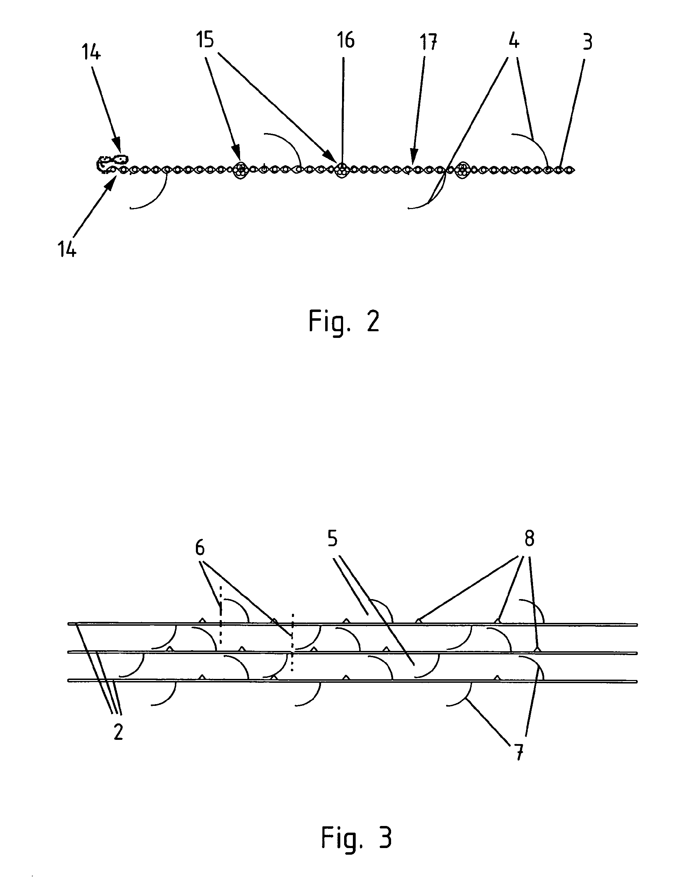

Figur 2 zeigt einen schematischen Schnitt durch eine Gewebelage 2. An wenigstens einer Kantenseite 13 ist die Gewebelage 2 mehrschichtig ausgebildet. Die mehrschichtige Ausbildung erfolgt durch Umknicken und Falten der Kantenseite 13. Hierdurch entstehen mehrere Schichten 14 der Gewebelage 2 an der Kantenseite 13. Weiterhin sind Flüssigkeitsleitabschnitte 15, bestehend aus wenigstens einem Flüssigkeitsleitfilament 16 in die Gewebelage 2 eingearbeitet. Die Flüssigkeitsleitabschnitte 15 können in Kettrichtung 10 oder Schussrichtung 11 in die Gewebelage 2 eingewebt sein. Die Filamente 3 weisen eine Oberfläche 17 auf, die unbehandelt sein kann bzw. durch ein metallisches oder keramisches Beschichtungsverfahren beschichtet ist.

Figur 3 zeigt exemplarisch einen Schnitt durch eine Gewebepackung 1, die durch mehrere Gewebelagen 2 ausgebildet ist. Zu erkennen ist, dass die Distanzausprägungen 7 die Gewebelagen 2 auf Abstand halten. Zwischen den Distanzausprägungen 7 sind die in ihrer Höhe geringeren Lenkausprägungen 8 erkennbar. Die Distanzausprägungen 7 weisen eine Öffnung 5 auf, die im Wesentlichen senkrecht zu der Gewebelage 2 ausgebildet ist.

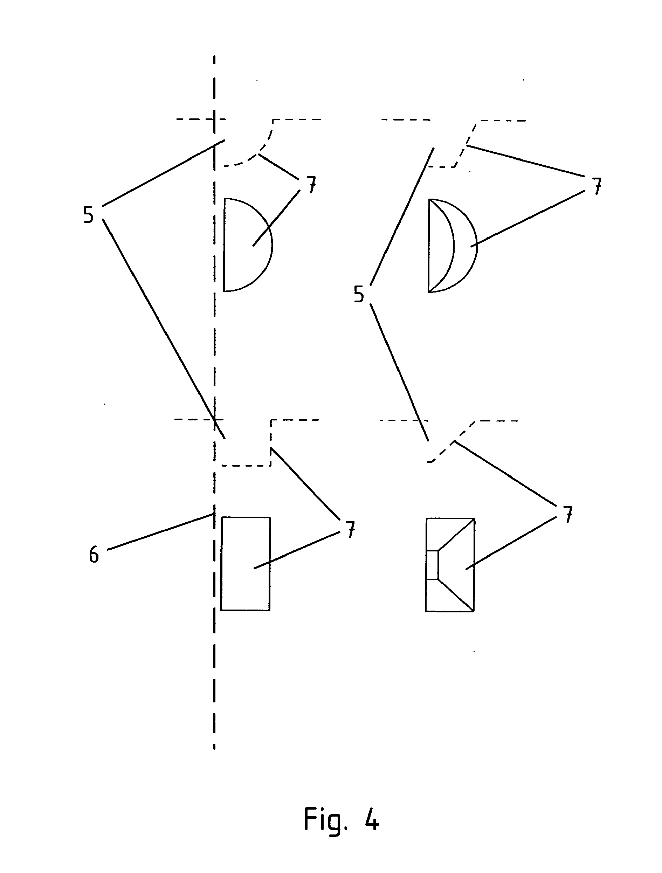

Figur 4 zeigt exemplarisch vier verschiedene Ausführungsvarianten für Distanzausprägungen 7 mit Öffnungen 5, wobei die Öffnungen 5 in einer Öffnungsebene 6 liegen. Die Ausführungsvarianten werden jeweils in einer seitlichen Schnittdarstellung und einer Draufsicht gezeigt.

### EPO - Munich 58

**Bezugszeichen**
- 1 -: Gewebepackung
- 2 -: Gewebelage
- 3 -: Filament
- 4 -: Ausprägung
- 5 -: Öffnung
- 6 -: Öffnungsebene
- 7 -: Distanzausprägungen
- 8 -: Lenkausprägungen
- 9 -: Verdichtung
- 10 -: Kettenrichtung
- 11 -: Schussrichtung
- 12 -: Bereich zwischen Distanzausprägungen
- 13 -: Kantenseite
- 14 -: Schichten
- 15 -: Flüssigkeitsleitabschnitte
- 16 -: Flüssigkeitsleüfilament
- 17 -: Oberfläche der Filamente

- X -: Richtung der Ausprägungsöffnungen

## Patentansprüche

1. Gewebepackung (1) zur thermischen Stofftrennung, aufweisend mehrere Gewebelagen (2) aus Metall- und/oder Kunststofffilamenten (3), wobei die Gewebelagen (2) Ausprägungen (4) aufweisen, wobei mindestens eine Ausprägung (4) eine Öffnung (5) aufweist, **dadurch gekennzeichnet, dass** die Öffnung (5) eine Öffnungsebene (6) besitzt, welche in einem Winkel von 40 bis 140 Grad zur Gewebelage (2) steht.

2. Gewebepackung nach Anspruch 1, **dadurch gekennzeichnet, dass** die Öffnungsebene (6) in einem Winkel von 60 bis 120 Grad, vorzugsweise 90 Grad zur Gewebelage (2) steht.

3. Gewebepackung nach Anspruch 1 oder 2, **dadurch gekennzeichnet, dass** alle Öffnungen (5) in eine gleiche Richtung (X) orientiert sind.

4. Gewebepackung nach einem der voranstehenden Ansprüche, **dadurch gekennzeichnet, dass** die Ausprägungen (4) vorzugsweise viertelkugelschalenförmig ausgebildet sind.

5. Gewebepackung nach einem der voranstehenden Ansprüche, **dadurch gekennzeichnet, dass** die Ausprägungen (4) durch Distanzausprägungen (7) und/oder Lenkausprägungen (8) ausgebildet sind, wobei die Lenkausprägungen (8) eine geringere Höhe als die Distanzausprägungen (7) aufweisen, vorzugsweise 2 bis 60 mm, besonders bevorzugt 2 bis 15 mm.

6. Gewebepackung nach einem der voranstehenden Ansprüche, **dadurch gekennzeichnet, dass** die Lenkausprägungen (8) und/oder Distanzausprägungen (7) beidseitig oder wechselseitig auf der Gewebelage (2) ausgebildet sind.

7. Gewebepackung nach einem der voranstehenden Ansprüche, **dadurch gekennzeichnet, dass** die Gewebelagen (2) Verdichtungen (9) in Ketten-(10) oder Schussrichtung (11) im Bereich (12) zwischen den Distanzausprägungen (7) aufweisen.

8. Gewebepackung nach einem der voranstehenden Ansprüche, **dadurch gekennzeichnet, dass** wenigstens eine Kantenseite (13) der Gewebelage (2) mehrschichtig ausgebildet ist, wobei die Schichten (14) vorzugsweise durch Umknicken oder Falten herstellbar sind.

9. Gewebepackung nach einem der voranstehenden Ansprüche, **dadurch gekennzeichnet, dass** in Schuss- (11) oder Kettrichtung (10) Flüssigkeitsleitabschnitte (15) eingewebt sind, die von mindestens einem Flüssigkeitsleitfilament (16) gebildet werden.

10. Gewebepackung nach einem der voranstehenden Ansprüche, **dadurch gekennzeichnet, dass** eine Oberfläche (17) der Filamente (3) mit einer keramischen oder metallischen Beschichtung ausgebildet ist.

11. Gewebepackung nach einem der voranstehenden Ansprüche, **dadurch gekennzeichnet, dass** die Gewebelage (2) aus drahtförmigen und/oder flächenförmigen Filamenten (3) monofil und/oder multifil ausgebildet ist, wobei die Gewebelage (2) bevorzugt durch Körperbindung, Atlasbindung, Leinenbindung oder Tressenbindung oder in beliebiger Kombination der Bindungsarten herstellbar ist, und wobei bevorzugt die Filamente (3) einen Durchmesser von 0,05 bis 1 mm, besonders bevorzugt 0,08 bis 0,25 mm aufweisen.

12. Gewebepackung nach einem der voranstehenden Ansprüche, **dadurch gekennzeichnet, dass** eine Gewebepackung (1) in Bezug auf eine vorherige Gewebepackung (1) unter einem Winkel von vorzugsweise 30 bis 90 Grad, besonders bevorzugt 45 bis 90 Grad anordnenbar ist.

13. Gewebepackung nach einem der voranstehenden Ansprüche, **dadurch gekennzeichnet, dass** die Ausprägungen (4) durch Stanzen und/oder Pressen in der Gewebelage (2) ausbildbar sind.

14. Verfahren zur Durchführung chemischer Reaktionen oder thermischer Stofftrennungen in einem Apparat, **dadurch gekennzeichnet, dass** eine Gewebepackung (1) nach einem der Ansprüche 1 bis 13 verwendet wird.

15. Verfahren nach Anspruch 14, **dadurch gekennzeichnet, dass** die Gewebelagen (2) der Gewebepackung (1) senkrecht im Apparat stehen.
